(19) **Europäisches Patentamt**
**European Patent Office**
**Office européen des brevets**

(11) **EP 4 101 310 B1**

(12) **EUROPEAN PATENT SPECIFICATION**

(45) Date of publication and mention
of the grant of the patent:
**17.09.2025 Bulletin 2025/38**

(21) Application number: **22182018.6**

(22) Date of filing: **27.01.2014**

(51) International Patent Classification (IPC):
*A23K 20/174* $^{(2016.01)}$     *A23K 40/30* $^{(2016.01)}$
*A23K 50/40* $^{(2016.01)}$

(52) Cooperative Patent Classification (CPC):
**A23K 20/174; A23K 40/30; A23K 50/40**

(54) **PALATABILITY ENHANCERS FOR PET FOOD, METHOD OF PREPARATION AND USES THEREOF**

SCHMACKHAFTIGKEITSVERSTÄRKER FÜR TIERNAHRUNG, VERFAHREN ZUR HERSTELLUNG UND VERWENDUNGEN DAVON

EXHAUSTEURS DE GOÛT POUR ALIMENTS POUR ANIMAUX DE COMPAGNIE, PROCÉDÉ DE PRÉPARATION ET LEURS UTILISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2013 EP 13306761**

(43) Date of publication of application:
**14.12.2022 Bulletin 2022/50**

(62) Document number(s) of the earlier application(s) in accordance with Art. 76 EPC:
**14701403.9 / 3 082 445**

(73) Proprietor: **Spécialités Pet Food**
**56250 Elven (FR)**

(72) Inventors:
• **AUBRIL, Delphine**
**56880 PLOEREN (FR)**
• **CALLEJON, Laurence**
**56800 Ploërmel (FR)**

(74) Representative: **Regimbeau**
**20, rue de Chazelles**
**75847 Paris Cedex 17 (FR)**

(56) References cited:
WO-A1-2013/095412     WO-A1-95/28854
WO-A2-2007/126990     US-A1- 2004 224 076
US-A1- 2009 235 872

**Description**

The present invention relates to the field of pet food.

More precisely, the present invention provides palatability-enhancing compositions comprising at least one compound selected from the group consisting of: ascorbic acid; isomers thereof; derivatives thereof; salts thereof; and combinations thereof as well as a liquid animal digest , for use in dog food, as well as methods of preparation and uses thereof.

## BACKGROUND

Pets, in particular dogs, are well taken care of by their owners which provide them a proper selection of foods. Those foods include not only pets' usual nutritionally-balanced diet, but also supplements and treats. Pets, like humans, are attracted to and eat more regularly and easily foods which they find palatable. Therefore, palatability enhancers are extremely important for animal consumption. Animal foods such as pet foods typically contain palatability enhancers to increase the palatability thereof, and to make them appealing to pets. A large number of palatability enhancers have been described so far.

However, food palatability differs not only from one type of food to another, but also from one animal species to another.

For example, a palatability enhancer effective in dry pet foods is usually not effective when used in semi-moist or wet pet foods.

Moreover, a palatability enhancer effective with cats is often not effective with dogs. Compositions for pets comprising ascorbic acids have been disclosed in the art. WO95/28854 discloses a dog beverage that can comprise vitamin supplements, including for example ascorbic acid. WO2013/095412 discloses a composition adapted to pets comprising ascorbyl esters for the treatment or reduction of dental conditions in an animal.WO2007/126990A2 discloses probiotic powder compositions for dogs or cats comprising ascorbic acid.

There is therefore a continuing need for new palatability enhancers, which provide a robust flavor and which are easily and effectively usable for companion animals including pets such as dogs, in types of foods so different as dry, intermediate and wet foods.

## SUMMARY OF THE INVENTION

The invention is set out in the appended set of claims and other aspects or embodiments set forth herein are for illustration purposes.

The present disclosure provides a pet food palatability-enhancing composition not encompassed by the wording of the claims.

The present disclosure provides a method for enhancing the palatability of a pet food not encompassed by the wording of the claims.

The present disclosure provides a method for boosting the palatability-enhancing effect of a pet food palatability enhancer not encompassed by the wording of the claims.

The present disclosure provides a kit for enhancing the palatability of a pet food not encompassed by the wording of the claims.

All these objects are herein focused on dog as a pet.

## DETAILED DESCRIPTION OF THE INVENTION

DEFINITIONS

Unless specifically stated otherwise, percentages are expressed herein by weight of a product reference. In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a food" includes a plurality of such "methods" or "foods". Similarly, the words "comprise", "comprises", and "comprising" are to be interpreted inclusively. Likewise the terms "include", "including" and "or" should all be construed to be inclusive. All these terms however have to be considered as encompassing exclusive embodiments that may also be referred to using words such as "consist of".

The methods and compositions and other embodiments exemplified here are not limited to the particular methodologies, protocols, and reagents that are described herein because, as the skilled artisan will appreciate, they may vary.

Unless defined otherwise, all technical and scientific terms, terms of art, and acronyms used herein have the meanings commonly understood by the skilled artisan in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

The term "about" as used herein when referring to a measurable value such as an amount, a temporal duration, and the like, is meant to encompass variations of $\pm 20\%$, more preferably $\pm 10\%$, even more preferably $\pm 5\%$ from the specified value, as such variations are appropriate to reproduce the disclosed methods and products.

The terms "pet" and "companion animal" are synonymous and mean any domesticated animal including, without limitation, cats, dogs, rabbits, guinea pigs, ferrets, hamsters, mice, gerbils, birds, horses, cows, goats, sheep, donkeys, pigs, and the like.

In the context of the present invention, pets such as dogs and cats are preferred. Dogs are even more preferred.

Ascorbic acid is an organic compound, mildly acidic, with molecular formula $C_6H_8O_6$.

By "ascorbic acid isomers", it is meant any compound having the same kinds and numbers of atoms as ascorbic acid but a different molecular arrangement such as, but not limited to, L-ascorbic acid, D-ascorbic acid, L-isoascorbic acid, D-isoascorbic acid, and the like.

By "ascorbic acid derivatives", it is meant any ascorbic acid metabolite and/or any ascorbic acid degradation product (such as, but not limited to, dehydroascorbic acid), any ascorbic acid ester (such as, but not limited to, ascorbyl palmitate, ascorbyl stearate), any molecule structurally linked to ascorbic acid (such as liposomal-encapsulated vitamin C).

By "ascorbic acid salts", it is meant any combination of ascorbic acid with mineral(s) to give salts (such as, but not limited to, sodium ascorbate, calcium ascorbate, potassium ascorbate, magnesium ascorbate, zinc ascorbate, molybdenum ascorbate, chromium ascorbate, manganese ascorbate, sodium ascorbyl phosphate, and the like).

By "edible sources of ascorbic acid", it is meant any natural food ingredient containing at least about 0.001%, preferably at least about 0.005%, more preferably at least about 0.01%, yet more preferably at least about 0.05% (by weight) of ascorbic acid (or isomers thereof or derivatives thereof or salts thereof). Non-limiting examples of such edible sources of ascorbic acid include plant sources: e.g., Kakadu plum, Camu Camu, Acerola, Seabuckthorn, Mica Muro, Indian gooseberry, Rose hip, Baobab, Chili pepper (green), Guava (common, raw), Blackcurrant, Red pepper, Chili pepper (red), Parsley, Kiwifruit, Broccoli, Loganberry, Redcurrant, Brussels sprouts, Wolfberry (Goji), Lychee, Persimmon (native, raw), Cloudberry, Elderberry, Papaya, Strawberry, Orange, Kale, Lemon, Melon, cantaloupe, Cauliflower, Garlic, Grapefruit, Raspberry, Tangerine, Mandarin orange, Passion fruit, Spinach, Cabbage raw green, Lime, Mango, Blackberry, Potato, Melon, honeydew, Tomato red, Cranberry, Tomato, Blueberry, Pineapple, Pawpaw, Grape, Apricot, Plum, Watermelon, Banana, Carrot, Avocado, Crabapple, Persimmon (Japanese, fresh), Onion, Cherry, Peach, Apple, Asparagus, Homed melon, Beetroot, Chokecherry, Pear, Lettuce, Cucumber, Eggplant, Raisin, Bilberry, Medlar, Aloe Vera, and the like. Further non-limiting examples of edible sources of ascorbic acid include animal sources: e.g., Calf liver, Beef liver, Oysters, Cod roe, Pork liver, Lamb brain, Chicken liver, Lamb liver, Calf adrenals, Lamb heart, Lamb tongue, goat milk, Camel milk, Cow milk, and the like.

By the term "sulfur-containing antioxidants", it is meant compounds containing sulfur and having some antioxidative properties such as free radical scavenging activity. Examples of such compounds are cysteine, acetylcysteine, cysteine hydrochloride, glutathione, alkali metal sulfites (such as sodium sulfite or potassium sulfite), alkali metal bisulfites (such as sodium bisulfite or potassium bisulfite), alkali metal meta bisulfites (such as sodium metabisulfite or potassium metabisulfite), ammonium sulfite, ammonium meta bisulfite, and the like.

By the terms "appropriate food carrier for at least one compound" (also referred to herein as "appropriate carrier", "appropriate food carrier", "food carrier", "carrier"), it is meant herein a usually inactive substance (i.e., an inactive molecule or an inactive mix of molecules) that is used in association with an active compound or mix of compounds. In the context of the present invention, said active compound or mix of compounds comprises ascorbic acid, derivatives thereof, isomers thereof, and salts thereof as defined above, as well as their combinations. Typically, a carrier aids the application of said active compound or mix of compounds. Appropriate food carriers may be solid or fluid. Examples of appropriate food carriers are, *inter alia,* water, carbohydrates (e.g., maltodextrin, cyclodextrin), microbial proteins (e.g., yeasts), vegetable/plant proteins (e.g., soya flour, soya protein concentrates, soya protein isolates), animal proteins, fat, as well as mineral or organic compounds, and the like.

The term "palatability" means a relative preference of an animal for one food product to another. Palatability refers to the overall willingness of an animal to eat a certain food product. Advantageously but not necessarily, palatability further refers to the capacity of the eaten food product to satisfy the animal. Whenever an animal shows a preference, for example, for one of two or more food products, the preferred food product is more "palatable" and has "enhanced palatability". The relative palatability of one food product compared to one or more other food products can be determined, for example, in side-by-side, free-choice comparisons, e.g., by relative consumption of the food products, or other appropriate measures of preference indicative of palatability. It can advantageously be determined by a standard testing protocol in which the animal has equal access to both food products such as a test called "two-bowl test" or "versus test" (see below). An alternative can be the "one bowl test" or "monadic test" in which only one bowl of food is offered to the animal. With this methodology, some criteria linked to palatability are recorded such as intake of food, percentage of animals having totally consumed the food, percentage of animals having refused the food (food not at all eaten), rate of consumption. Such preference can arise from any of the animal's senses, but typically is related to, inter alia, taste, aftertaste, smell, mouth feel and/or texture.

A pet food product stated herein to have "enhanced palatability" is one for which a pet exhibits preference relative to a control food product. Advantageously, a pet food product has two major advantages: it has enhanced palatability to pets and it is appealing to pet owners.

The terms "palatability enhancers" (PEs), "palatants", "palatability agents", "appetizing factors", "appetizing agents", "palatability-enhancing compositions (PECs)", and any other similar terms mean any material that enhances palatability of a food product to an animal. A PE may be a single material or a blend of materials, and it may be natural, processed or unprocessed, synthetic, or part of natural and part of synthetic materials. Typically, a PE for animal food is a liquid or dry edible composition that provides a taste, aftertaste, smell, mouth feel, texture, and/or organoleptic sensation that is pleasant to the target animal. For pets, a PE may contribute to attractiveness (also called "initial food appeal") by its smell and/or to continued consumption by its smell but also by its taste and/or its aftertaste, and/or its mouth feel, and/or its texture. "Attractiveness" is an aspect of palatability that induces an animal to initially taste or try a food product, and that can be measured by the criteria "first choice" or "first food consumed". "Continued consumption" is an aspect of palatability that induces an animal to continue consuming a food product that has been initially only tasted or tried.

Although being in principle equivalent, the terms "palatability enhancer (PE)" and "palatability-enhancing composition (PEC)" will be conveniently used in the present disclosure to distinguish two types of products as follows:

- a "PEC" designates here:

    ◦ either at least one compound selected from the group consisting of: ascorbic acid; isomers thereof; derivatives thereof; salts thereof; and combinations thereof, or
    ◦ a mix comprising said at least one compound such as a mix of said at least one compound with (i) one or more food carriers and/or (ii) one or more palatability-enhancing composition ingredients and/or (iii) one or more PEs,

    wherein said at least one compound is present in an appropriate amount for enhancing palatability (for example, an appropriate amount for enhancing palatability is here from 0.01% by weight of the PEC);
- whereas, here, a "PE" does not comprise any such compound selected from the group consisting of: ascorbic acid; isomers thereof; derivatives thereof; salts thereof; and combinations thereof, in such an appropriate amount for enhancing palatability. This means that said at least one compound may however be present in a "PE" in an appropriate amount for achieving an antioxidant effect but not a palatability-enhancing effect. For example, an appropriate amount for achieving an antioxidant effect but not a palatability-enhancing effect is here below 0.01% by weight of the PE.

The term "food" or "food product" as used herein means a product or composition that is intended for ingestion by an animal and provides at least one nutrient to the animal. The term "food" includes any food, feed, snack, food supplement, treat, meal substitute, or meal replacement. "Food" encompasses such products in any form, solids, liquids, gels, or mixtures or combinations thereof. Thus, beverages of any type are clearly encompassed within the term "food."

The term "pet food" or "pet food product" means a composition intended for consumption by a pet. For instance, a "dog food" or a "dog food product" means a composition intended for consumption by a dog. As another example, a "cat food" or a "cat food product" means a composition intended for consumption by a cat.

There are three main categories or classes of pet food products depending on their moisture content, which is either low or medium or high:

- dry or low moisture-containing products (having less than about 15% moisture): they usually produce a crunching sound when chewed by a pet; they are generally highly nutritious, may be inexpensively packaged (e.g., in bags or boxes), and are highly convenient to store and use;
- canned or wet or high moisture-containing products (having more than about 50% moisture): typically high meat-containing products ; they are usually costly to produce and package (mainly in cans);
- semi-moist or semi-dry or soft dry or soft moist or intermediate or medium moisture-containing products (having from about 15 to about 50% moisture): usually packaged in appropriate bags or boxes.

Nutritionally-balanced pet foods are widely known and used in the art.

A "nutritionally-complete", "nutritionally-balanced" or "complete and nutritionally-balanced food" is one that contains all known required nutrients for the intended recipient or consumer of the food, in appropriate amounts and proportions based, for example, on recommendations of recognized or competent authorities in the field of companion animal nutrition. Such foods are therefore capable of serving as a sole source of dietary intake to maintain life, without the addition of supplemental nutritional sources. Thus, such foods do not comprise food supplements and treats, as defined below.

A nutritionally-complete food can be, for example, in the form of kibbles, chunk-in-"X" products, and loafs, as defined below.

The term "kibble" used herein refers to particulate chunks or pieces formed by either a pelleting or extrusion process. Typically, kibbles are produced to give dry and semi-moist pet food. The pieces can vary in sizes and shapes, depending on the process or the equipment. For instance, kibbles can have spherical, cylindrical, oval, or similar shapes. They can have a largest dimension of less than about 2 cm for example.

The term "chunk-in-"X" products" mean herein all edible foodstuffs comprising chunks in a preparation (said preparation being "the X preparation"). Classical examples thereof are chunk-in-jelly products, chunk-in-gravy products, and the like. This category of "chunk-in-X" products encompasses also edible forms other than chunks that may be contained in the X preparation such as a jelly, a gravy, and the like. For instance, other forms than chunks may be sliced products, grated products, etc.

The term "loaf" used herein refers to edible foodstuffs obtained as moist products, and includes terrines, pâtés, mousses, and the like.

The term "food supplement" or "dietary supplement" or "supplement" means a product that is intended to be ingested in addition to the normal animal diet. Dietary supplements may be in any form, e.g., solid, liquid, gel, tablets, capsules, powder, and the like. Preferably they are provided in convenient dosage forms. In some embodiments, they are provided in bulk consumer packages such as bulk powders, liquids, gels, or oils. In other embodiments, supplements are provided in bulk quantities to be included in other food items such as snacks, treats, supplement bars, beverages, and the like. Palatability enhancers can be used to improve palatability of dietary supplements in the same manner as they are used to improve palatability of nutritionally-balanced foods.

The term "treat" means any food item that is designed to be fed to a pet, preferably at non-meal time, by the owner to help, promote or sustain a bonding process between a pet and its owner. Examples of treats are bones, rawhides, sticks, pillows, biscuits, and the like. Treats may be nutritional or not, entirely or partially consumable (e.g., consumable toys). Treats often contain palatability enhancers in a manner comparable to nutritionally-balanced foods.

The term "animal digest" means herein material which results from chemical and/or enzymatic hydrolysis of clean, undecomposed animal tissue. In some embodiments, an animal digest as used herein is fully consistent with the definition promulgated by the Association Of American Feed Control Officials, Inc. (AAFCO). Animal digest is preferably derived from animal tissues, including cold-blooded marine animals, excluding hair, horns, teeth, hooves, and feathers. The skilled artisan will appreciate that while such tissues are not preferred, trace amounts might be found unavoidably even under good manufacturing practices. Also not included are visceral contents or foreign or fecal matter, although trace contaminant amounts are sometimes present. An animal digest may be dried or not. Examples of animal digests are:

- digest of poultry (or pork, beef, sheep, lamb, fish, etc): material from poultry (pork, beef, etc) which results from chemical and/or enzymatic hydrolysis of clean and undecomposed tissue;
- digest of pork (or beef, sheep, lamb, fish, etc) by-products: material from pork (beef, etc.) which results from chemical and/or enzymatic hydrolysis of clean and undecomposed tissue from non-rendered clean parts from cattle (pigs, sheep, lamb, etc), other than meat, for example lungs, spleen, kidneys, brain, livers, blood, bone, partially-defatted low-temperature fatty tissue, and stomachs and intestines, freed of their contents;
- digest of poultry by-products: material which results from chemical and/or enzymatic hydrolysis of clean and undecomposed tissue from non-rendered clean parts of poultry, other than meat, such as livers, hearts, heads, feet, and viscera. As used herein, "poultry" encompasses any species or kind of bird, preferably chicken, turkey, duck, and the like; and

- digest of fish by-products: material which results from chemical and/or enzymatic hydrolysis of clean and undecomposed tissue from non-rendered clean parts from fish. As used herein, "fish" encompasses any species or kind of fish or crustaceans, preferably tuna, salmon, cod, whitefish, shrimp, sardine, and the like.

Animal digests may also be referred to as "animal products" or "animal by-products", all these terms being used herein as synonymous.

The terms "dairy products and by-products" include, without limitation, products and by-products derived from cheese, milk, whey, and the like.

The term "yeast" herein refers to any yeast, preferably inactive, as well as to yeast by-products that are compatible with compositions for animal consumption. Yeasts are well known in the art as being protein-rich. Yeasts include, without limitation, brewer's yeast, baker's yeast, torula yeast, molasses yeast, and the like. Yeast by-products include, without limitation, yeast extracts, yeast hydrolysates, cream yeasts, etc.

As used herein, a "pet food ingredient" is any compound, composition or material that is suitable for pet consumption. Non-limiting examples of pet food ingredients are palatability enhancers, animal digests, proteins, peptides, amino acids, grains, carbohydrates, fats or lipids, nutrients, anti-oxidants, preservatives, surfactants, texturing agents, colouring agents, seasonings, etc. One or more pet food ingredients form a "pet food preparation" that will be further processed so as to obtain a final pet food (e.g., a ready-to-eat or ready-to-use pet food).

As used herein, a "palatability-enhancing composition ingredient" or "palatability enhancer ingredient" is any compound, composition or material that is suitable for pet consumption. Non-limiting examples of palatability-enhancing composition ingredients are animal digests, proteins, peptides, amino acids, carbohydrates, fats or lipids, nutrients, anti-oxidants, preservatives, surfactants, texturing agents, etc. Ingredients may be comprised as such in the palatability-enhancing composition, or they can be contacted into the composition and react *in situ* for producing transformed materials that are also encompassed by the term "palatability-enhancing composition ingredient". Examples of ingredients that react together in the composition are, without limitation, fats, peptides, amino acids, and carbohydrates, so as to obtain transformed materials such as Maillard reaction products, and the like.

"Proteins" include all conventional protein sources that are compatible for animal consumption, especially plant or vegetable proteins, animal proteins (such as casein or albumin or animal digests), and microbial proteins (e.g., yeast).

Examples of vegetable proteins are corn gluten, soy protein, soy flour, hydrolyzed vegetable protein (HVP), and the like.

Examples of grains are corn, milo, alfalfa, wheat, barley, rice, soy, and the like.

Examples of carbohydrates include dextrose, fructose, sucrose, polysaccharides, fibers, starches, and the like.

Examples of fats include tallow, oils, from any origin such as animal, plant (including vegetable), or marine oils. Plant oils which are available in large quantities are typically canola oil, soybean oil, com oil, olive oil, sunflower oil, linseed oil, palm oil, safflower oil, and the like, as well as by-products thereof. Typical animal fats are tallow, lard, poultry fat, and the like, as well as by-products thereof. Marine oils are typically tuna oil, sardine oil, salmon oil, anchovy oil, fish oil, and the like, as well as by-products thereof. Also are encompassed herein the fats that are derived from animal, plant, marine sources, or that are produced by animals and plants.

Examples of nutrients include, without limitation, minerals and electrolytes such as calcium, potassium, sodium, zinc, iron, manganese, copper, iodine, and the like.

Anti-oxidants and preservatives are, for example, tocopherols, rosemary extract, phosphoric acid, and the like.

"Surfactants" are molecules that are surface active. They typically have a hydrophilic portion (e.g., one or more head groups) and a hydrophobic (or lipophilic) portion (e.g., one or more tails). Surfactants are well-known in the art. One can cite, for example, Tween surfactants. Surfactants include, without limitation, emulsifiers and wetting agents. **In** some instances, the terms "surfactants" and "emulsifiers" can be used interchangeably.

A "thermal reaction" is a reaction obtained by combining at an elevated temperature, at least one reducing sugar and at least one nitrogen compound (e.g., an amino acid). Such a reaction may actually include various concomitant and/or successive reactions, including, e.g., Maillard reaction(s). It is thus meant herein by the term "Maillard ingredient(s)" or "Maillard precursor(s)", one or more reducing sugars and/or one or more nitrogen compounds. Indeed, Maillard ingredients are ingredients used to achieve one or more thermal reactions as defined above.

"Coating", as used herein, refers to the topical deposition of the palatability enhancer onto the surface of the basal food composition, such as by spraying, dusting, and the like.

"Inclusion" as used herein, refers to the addition of the palatability enhancer internally to the pet food preparation, by mixing it with other pet food ingredients, before further processing steps for obtaining the final pet food product (including thermal treatment and/or extrusion and/or retorting, etc).

"Containers" include, but are not limited to, bags, boxes, cartons, bottles, packages of any type or design or material, over-wrap, shrink-wrap, stapled or otherwise affixed elements, or combinations thereof.

The term "single package" means that the elements of a kit are physically associated in or with one or more containers and considered a unit for manufacture, distribution, sale, or use. A single package may be containers of individual elements physically associated such that they are considered a unit for manufacture, distribution, sale, or use.

As used herein, a "means for communicating information or instructions" is a kit element under any form suitable for providing information, instructions, recommendations, and/or warranties, etc. Such a means can comprise a document, digital storage media, optical storage media, audio presentation, visual display containing information. The means of communication can be a displayed web site, brochure, product label, package insert, advertisement, visual display, etc.

**DESCRIPTION OF SOME EMBODIMENTS OF THE INVENTION**

In the context of the present invention, a material (herein, at least one compound selected from the group consisting of: ascorbic acid; isomers thereof; derivatives thereof; salts thereof; edible sources thereof; and combinations thereof) was proved to be of high interest for enhancing palatability of dog food (see Examples 2 to 7 below) while it was not when used in cat food (see Comparative Example 8 below).

Thus, the present invention concerns dog as a pet.

In a first aspect, the present invention concerns a dog food palatability-enhancing composition (PEC) comprising:

- at least 0,01% by weight of one compound selected from the group consisting of: ascorbic acid; isomers thereof; derivatives thereof; salts thereof; and combinations thereof;
- and at least one liquid component, wherein said liquid component is an animal digest.

Preferably, said PEC further comprises at least one appropriate food carrier for said compound and/or at least one palatability-enhancing composition ingredient (such as fat and/or one or more Maillard ingredients) and/or at least one palatability enhancer (PE; such as one or more animal digests). For clarity purposes, said at least one appropriate food carrier for said compound and/or said at least one palatability-enhancing composition ingredient and/or said at least one PE will be referred to herein as "component(s)".

In particular, in said PEC, said palatability-enhancing composition ingredient and/or said PE is combined with said compound selected from the group consisting of: ascorbic acid; isomers thereof; derivatives thereof; salts thereof; and combinations thereof, and optionally with said food carrier.

When said PEC comprises not only said at least one compound, but also at least one other component such as at least one appropriate food carrier and/or at least one palatability-enhancing composition ingredient and/or at least one PE, said at least one component is preferably liquid to be mixed with said at least one compound. Thus, the present invention preferably concerns a dog food PEC comprising a mix obtained by mixing:

- at least 0,01% by weight of one compound selected from the group consisting of: ascorbic acid; isomers thereof; derivatives thereof; salts thereof; and combinations thereof, with
- at least one liquid component, wherein said liquid component is an animal digest,
- at least one liquid other component (such as at least one appropriate food carrier and/or at least one palatability-enhancing composition ingredient and/or at least one PE).

Preferably, said at least 0,01% by weight of one compound selected from the group consisting of: ascorbic acid; isomers thereof; derivatives thereof; salts thereof; and combinations thereof, is present in an appropriate amount for achieving the expected palatability-enhancing effect of interest when finally used in a dog food.

Said PEC comprises at least 0.01%, particularly at least 0.05%, more particularly at least 0.1%, at least 0.15%, at least 0.20%, at least 0.25%, at least 0.3%, at least 0.5%, at least 1%, at least 1.5%, at least 2%, at least 3%, at least 4%, at least 5%, at least 7.5%, at least 10%, at least 15%, at least 20%, at least 25%, at east 30%, at least 35%, at least 40%, at least 45%, at least 50%, at lest 55%, at least 60%, at least 65%, at least 70%, at least 75%, at least 80%, at least 85%, at least 90%, at least 95%, at least 99%, at least 99.95%, at least 99.99% and even more particularly 100% by weight of said compound selected from the group consisting of: ascorbic acid; isomers thereof; derivatives thereof; salts thereof; and combinations thereof, based on the total weight of said PEC.

In particular, said PEC comprises from 0.01 to 100 %, particularly from 0.05 to 99.99%, more particularly from 0.10 to 99.95% by weight of said compound, based on the total weight of said PEC.

The invention further pertains to a method for the preparation of a dog food palatability-enhancing composition according to the invention, comprising mixing:

- at least one compound selected from the group consisting of: ascorbic acid; isomers thereof; derivatives thereof; salts thereof; and combinations thereof; and
- at least one liquid component, wherein said liquid component is an animal digest.

It is also herein disclosed a method for enhancing the palatability of a dog food not encompassed by the wording of the claims, comprising:

a) providing a PEC as described above that comprises at least one compound selected from the group consisting of: ascorbic acid; isomers thereof; derivatives thereof; salts thereof; edible sources thereof; and combinations thereof;
b) optionally, heat-treating said PEC;

c) adding said optionally heat-treated PEC to a dog food preparation; and

d) obtaining a dog food having enhanced palatability, particularly in comparison with said dog food which does not comprise said PEC.

Preferably, in the method disclosed above, said step a) comprises at least the following sub-steps:

a1) providing at least one compound selected from the group consisting of: ascorbic acid; isomers thereof; derivatives thereof; salts thereof; edible sources thereof; and combinations thereof;

a2) providing at least one component (such as at least one appropriate food carrier and/or at least one palatability-enhancing composition ingredient and/or at least one PE);

a3) combining said at least one compound of step a1) with said at least one component of step a2).

Preferably, in the method disclosed above, said at least one component of sub-step a2) is liquid.

Preferably, in the method disclosed above, said dog food comprises at least 0.001 %, at least 0.0025%, at least 0.005%, at least 0.0075%, at least 0.01%, at least 0.025%, at least 0.05%, at least 0.075%, at least 0.1%, at least 0.25%, at least 0.5%, at least 0.75%, at least 1%, at least 1.25%, at least 1.5%, at least 1.75%, at least 2%, at least 3%, at least 4%, at least 5% by weight of said PEC, based on the total weight of said dog food.

In particular, in the method disclosed above, said dog food comprises from 0.001 to 5%, particularly from 0.0025 to 2%, more particularly from 0.005 to 1.5%, and even more particularly from 0.0075 to 1.25% by weight of said PEC, based on the total weight of said palatable dog food.

Preferably, in the method disclosed above, combining a3) can be a one-step mixing or a multiple-step mixing. For instance, in a one-step mixing, said at least one PE and/or at least one palatability-enhancing composition ingredient and/or at least one appropriate food carrier is(are) simultaneously mixed with said at least one compound. Alternatively, in a two-step mixing, said at least one PE and/or at least one palatability-enhancing composition ingredient can be mixed with a pre-existing mixture comprising said at least one compound and said at least one appropriate food carrier. Yet alternatively, combining a3) can be a three-step mixing if each of said at least one PE and/or at least one palatability-enhancing composition ingredient and/or at least one appropriate food carrier, and said at least one compound are mixed sequentially.

In the method disclosed above, the optional step b) of heat treatment is performed to achieve, e.g., thermal reaction(s) and/or drying. When indicating herein "step b)" or "a step b)" or "the step b)", it is meant one or more steps b). Thus, more than one step b) can be advantageously performed: for example, one or more steps b) to achieve thermal reaction(s), and one or more steps b) for drying the resulting composition. The number and the sequence of these steps b) will be easily determined by the skilled artisan based on his expertise and in light of the general knowledge in the field of the invention.

Drying is routine for the skilled artisan. Typically, drying is performed so as to remove any excess water. In particular, the resulting water content is less than or equal to about 15%, preferably about 10%, yet preferably from about 1 to about 8%, by weight of the thus obtained dry product.

It is also herein disclosed a method not encompassed by the wording of the claims which is for boosting the palatability-enhancing effect of a dog food PE, comprising:

a) combining said PE with at least one first PEC (hereinafter referred to as "PECa") that comprises at least one compound selected from the group consisting of: ascorbic acid; isomers thereof; derivatives thereof; salts thereof; edible sources thereof; and combinations thereof; and

b) obtaining a second PEC (hereinafter referred to as "PECb") wherein the palatability-enhancing effect of said PE is boosted, in particular in comparison with said PE which is not combined with said at least one PECa.

Preferably in the method disclosed above, in step a), said PE is liquid.

Preferably in the method disclosed above, said PECa in step a) is obtained by a method comprising at least the following sub-steps:

i) providing at least one compound selected from the group consisting of: ascorbic acid; isomers thereof; derivatives thereof; salts thereof; edible sources thereof; and combinations thereof;

ii) providing at least one component (such as at least one appropriate food carrier and/or at least one palatability-enhancing composition ingredient and/or at least one PE different from the PE in step a) above);

iii) combining said at least one compound of step i) with said at least one component of step ii), thereby obtaining said PECa.

Preferably in the method disclosed above, said at least one compound selected from the group consisting of:

ascorbic acid; isomers thereof; derivatives thereof; salts thereof; and combinations thereof, is present in an appropriate amount for achieving the expected palatability-enhancing effect of interest when finally used in a dog food.

Preferably in the method disclosed above, said PECa obtained in step a) comprises at least 0.01%, particularly at least 0.05%, more particularly at least 0.1%, at least 0.15%, at least 0.20%, at least 0.25%, at least 0.3%, at least 0.5%, at least 1%, at least 1.5%, at least 2%, at least 3%, at least 4%, at least 5%, at least 7.5%, at least 10%, at least 15%, at least 20%, at least 25%, at east 30%, at least 35%, at least 40%, at least 45%, at least 50%, at lest 55%, at least 60%, at least 65%, at least 70%, at least 75%, at least 80%, at least 85%, at least 90%, at least 95%, at least 99.9%, at least 99.95%, at least 99.99% and even more particularly 100%, by weight of said compound selected from the group consisting of: ascorbic acid; isomers thereof; derivatives thereof; salts thereof; and combinations thereof, based on the total weight of said PECa.

In particular in the method disclosed above, said PECa obtained in step a) comprises from 0.01 to 100 %, particularly, from 0.05 to 99.99%, more particularly from 0.10 to 99.95% by weight of said compound selected from the group consisting of: ascorbic acid; isomers thereof; derivatives thereof; salts thereof; and combinations thereof, based on the total weight of said PECa.

Preferably in the method disclosed above, said PECb obtained in step b) comprises at least 0.01%, particularly at least 0.05%, more particularly at least 0.1%, at least 0.15%, at least 0.20%, at least 0.25%, at least 0.3%, at least 0.5%, at least 1%, at least 1.5%, at least 2%, at least 3%, at least 4%, at least 5%, at least 7.5%, at least 10%, at least 15%, at least 20%, at least 25%, at east 30%, at least 35%, at least 40%, at least 45%, at least 50%, at lest 55%, at least 60%, at least 65%, at least 70%, at least 75%, at least 80%, at least 85%, at least 90%, at least 95%, at least 99.9%, at least 99.95%, and even more particularly at least 99.99%, by weight of said PECa, based on the total weight of said PECb.

In particular in the method disclosed above, said PECb obtained in step b) comprises from 0.01 to 99.99 %, particularly, from 0.05 to 99.95%, more particularly from 0.10 to 99.90% by weight of said PECa, based on the total weight of said PECb.

In one embodiment of the method disclosed above, said PECb combining said PE with said PECa comprising said compound selected from the group consisting of: ascorbic acid; isomers thereof; derivatives thereof; salts thereof; and combinations thereof, is then added to a dog food preparation. In another embodiment, said PE and said PECa are added, either simultaneously or sequentially, to a dog food preparation where they are combined (step a)) *in situ.*

It is also herein disclosed a method not encompassed by the wording of the claims which is for the preparation of a palatable dog food, comprising:

a) providing a first PEC (hereinafter referred to as "PECa") comprising at least one compound selected from the group consisting of: ascorbic acid; isomers thereof; derivatives thereof; salts thereof; edible sources thereof; and combinations thereof;

b) optionally, combining said PECa with at least one component (such as at least one PE and/or at least one palatability-enhancing composition ingredient), to prepare a second PEC (hereinafter referred to as "PECb") ;

c) optionally, heat-treating the resulting PEC (PECa obtained from step a) or PECb obtained from step b));

d) adding the thus obtained (and optionally heat-treated) PEC to a dog food preparation; and

e) obtaining a palatable dog food.

In the method disclosed above, said PECa and PECb can be in a liquid or in a dry form, preferably in a liquid form.

In the method disclosed above, said at least one component (such as at least one PE and/or at least one palatability-enhancing composition ingredient) in step b) can be in a liquid or in a dry form. Preferably, said at least one component is liquid. In particular said PE is preferably in a liquid form.

In particular, in the method disclosed above, said PECa comprises at least 0.01%, particularly at least 0.05%, more particularly at least 0.1%, at least 0.15%, at least 0.20%, at least 0.25%, at least 0.3%, at least 0.5%, at least 1%, at least 1.5%, at least 2%, at least 3%, at least 4%, at least 5%, at least 7.5%, at least 10%, at least 15%, at least 20%, at least 25%, at least 30%, at least 35%, at least 40%, at least 45%, at least 50%, at lest 55%, at least 60%, at least 65%, at least 70%, at least 75%, at least 80%, at least 85%, at least 90%, at least 95%, at least 99%, at least 99.95%, at least 99.99% and even more particularly 100% by weight of said compound selected from the group consisting of: ascorbic acid; isomers thereof; derivatives thereof; salts thereof; edible sources thereof; and combinations thereof, based on the total weight of said PECa.

In particular, in the method disclosed above, said PECa comprises from 0.01 to 100 %, particularly, from 0.05 to 99.99%, more particularly from 0.10 to 99.95% by weight of said compound, based on the total weight of said PECa.

Preferably, in the method disclosed above, said PECa is present in an appropriate amount for achieving the expected palatability-enhancing effect of interest when finally used in a dog food.

In particular, in the method disclosed above, said PECb comprises at least 0.01%, particularly at least 0.05%, more particularly at least 0.1%, at least 0.15%, at least 0.20%, at least 0.25%, at least 0.3%, at least 0.5%, at least 1%, at least 1.5%, at least 2%, at least 3%, at least 4%, at least 5%, at least 7.5%, at least 10%, at least 15%, at least 20%, at least 25%, at least 30%, at least 35%, at least 40%, at least 45%, at least 50%, at lest 55%, at least 60%, at least 65%, at least 70%, at least 75%, at least 80%, at least 85%, at least 90%, at least 95%, at least 99.9%, at least 99.95% and even more particularly at least 99.99% by weight of said PECa, based on the total weight of PECb.

In particular, in the method disclosed above, said PECb comprises from 0.01 to 99.99 %, particularly, from 0.05 to 99.95%, more particularly from 0.1 to 99.9% by weight of said PECa, based on the total weight of PECb.

Preferably, in the method disclosed above, said palatable dog food comprises at least 0.001 %, at least 0.0025%, at least 0.005%, at least 0.0075%, at least 0.01%, at least 0.025%, at least 0.05%, at least 0.075%, at least 0.1%, at least 0.25%, at least 0.5%, at least 0.75%, at least 1%, at least 1.25%, at least 1.5%, at least 1.75%, at least 2%, at least 3%, at least 4%, at least 5% by weight of said PECa, based on the total weight of said palatable dog food.

In particular, in the method disclosed above, said palatable dog food comprises from 0.001 to 5%, particularly, from 0.0025 to 2%, more particularly from 0.005 to 1.5%, and even more particularly from 0.0075 to 1.25% by weight of said PECa, based on the total weight of said palatable dog food.

Preferably, in the method disclosed above, in step b), said palatability-enhancing composition ingredient is fat.

Preferably, in the method disclosed above, in step b), said palatability-enhancing composition ingredient is one or more Maillard ingredients.

Preferably, in the method disclosed above, in step b), said PE comprises at least one animal digest.

Preferably, in the method disclosed above, said PECa of step a) or PECb of step b) or PEC of step c) further comprise(s) at least one appropriate food carrier for said compound selected from the group consisting of: ascorbic acid; isomers thereof; derivatives thereof; salts thereof; edible sources thereof; and combinations thereof.

In particular, in the method disclosed above, in step b), said PECa can be combined with said at least one PE at the beginning (e.g., mixed with other ingredients of said PE) or at the end of the manufacturing process of said PE. When said PE is in a powder form, said PECa is advantageously combined with said at least one PE at the beginning of the manufacturing process of said PE.

Here again, the optional step c) of heat treatment is performed to achieve, e.g., thermal reaction(s) and/or drying. When indicating herein "step c)" or "a step c)" or "the step c)", it is meant one or more steps c). Thus, more than one steps c) can be advantageously performed: for example, one or more steps c) to achieve thermal reaction(s), and one or more steps c) for drying the resulting composition. The number and the sequence of these steps c) will be easily determined by the skilled artisan based on his expertise and in light of the general knowledge in the field of the invention.

Step d) can be performed by various methods well known by one skilled in the art. For example, said PECa of step a) or PECb of step b) or PEC of step c) (that can be liquid or dry) can be added to a dog food preparation by coating or by inclusion. Particularly, when PECs are added to a dog food preparation by inclusion, they can be mixed with said dog food preparation before extrusion (for dry or semi-dry pet foods) or before sterilization (for wet pet foods).

It is also herein disclosed a method not encompassed by the wording of the claims which is for feeding a dog, comprising feeding a dog with a dog food, wherein said dog food comprises:

- at least one compound selected from the group consisting of: ascorbic acid; isomers thereof; derivatives thereof; salts thereof; and combinations thereof,
- optionally, at least one appropriate food carrier for said compound, and
- optionally, at least one PE.

Preferably, in the method disclosed above, said at least one PE is liquid.

Preferably, in the method disclosed above, said dog food comprises at least 0.001 %, at least 0.0025%, at least 0.005%, at least 0.0075%, at least 0.01%, at least 0.025%, at least 0.05%, at least 0.075%, at least 0.1%, at least 0.25%, at least 0.5%, at least 0.75%, at least 1%, at least 1.25%, at least 1.5%, at least 1.75%, at least 2%, at least 3%, at least 4%, at least 5%, by weight of said compound selected from the group consisting of: ascorbic acid; isomers thereof; derivatives thereof; salts thereof; and combinations thereof, based on the total weight of said dog food.

In particular, in the method disclosed above, said dog food comprises from 0.001 to 5%, particularly from 0.0025 to 2%, more particularly from 0.005 to 1.5%, and even more particularly from 0.0075 to 1.25% by weight of said compound, based on the total weight of said dog food.

It is also herein disclosed a palatable dog food not encompassed by the wording of the claims, comprising:

- at least one compound selected from the group consisting of: ascorbic acid; isomers thereof; derivatives thereof; salts thereof; and combinations thereof,
- optionally, at least one appropriate food carrier for said compound, and
- optionally, at least one PE,

wherein, said dog food comprises at least 0.001 %, at least 0.0025%, at least 0.005%, at least 0.0075%, at least 0.01%, at least 0.025%, at least 0.05%, at least 0.075%, at least 0.1%, at least 0.25%, at least 0.5%, at least 0.75%, at least 1%, at least 1.25%, at least 1.5%, at least 1.75%, at least 2%, at least 3%, at least 4%, at least 5%, by weight of said compound selected from the group consisting of: ascorbic acid; isomers thereof; derivatives thereof; salts thereof; and combinations thereof, based on the total weight of said dog food.

It is also herein disclosed a kit not encompassed by the wording of the claims, which is for enhancing the palatability of a dog food comprising, in one or more containers in a single package:

- at least one compound selected from the group consisting of: ascorbic acid; isomers thereof; derivatives thereof; salts thereof; and combinations thereof;
- optionally, at least one appropriate food carrier for said compound;
- optionally, at least one PE;
- optionally, at least one Maillard ingredient; and
- optionally, at least one dog food ingredient.

It is also herein disclosed a kit not encompassed by the wording of the claims, which is for enhancing the palatability of a dog food comprising, in one or more containers in a single package:

- one or more PECs as disclosed above; and
- optionally, at least one dog food ingredient.

Particular kits as disclosed above further comprise a means for communicating information or instructions, to help using the kits' elements.

It is also herein disclosed the use, not encompassed by the wording of the claims, of at least one compound selected from the group consisting of: ascorbic acid; isomers thereof; derivatives thereof; salts thereof; and combinations thereof, for enhancing the palatability of a dog food.

Another aspect of the present invention relates to the use of at least one compound selected from the group consisting of: ascorbic acid; isomers thereof; derivatives thereof; salts thereof; and combinations thereof, as a palatability-enhancing element of a dog food palatability-enhancing composition, said dog food palatability-enhancing composition further comprising at least one liquid component.

It is also herein disclosed the use, not encompassed by the wording of the claims, of at least one compound selected from the group consisting of: ascorbic acid; isomers thereof; derivatives thereof; salts thereof; and combinations thereof, in a method for preparing a dog food palatability-enhancing composition.

In all aspects of the present invention, said at least one compound selected from the group consisting of: ascorbic acid; isomers thereof; derivatives thereof; salts thereof; and combinations thereof, can be under any appropriate form, including any free forms and any protected forms such as encapsulated forms (e.g., for protecting compounds during manufacturing of pet food, especially during extrusion).

In all aspects of the present invention, said at least one compound can be mixed with at least one sulfur-containing antioxidant, in particular selected from the group consisting of:

- cysteine, acetylcysteine, cysteine hydrochloride, glutathione, alkali metal sulfites (such as sodium sulfite or potassium sulfite), alkali metal bisulfites (such as sodium bisulfite or potassium bisulfite), alkali metal meta bisulfites (such as sodium metabisulfite or potassium metabisulfite), ammonium sulfite, ammonium meta bisulfite, and the like; thereby obtaining a better preservation of the compound during manufacturing and/or storage.

The dog food palatability-enhancing composition comprising at least 0,01% by weight of one compound selected from the group consisting of: ascorbic acid; isomers thereof; derivatives thereof; salts thereof; and combinations thereof, and at least one liquid component, wherein said liquid component is an animal digest, according to the invention can further comprise at least one sulfur-containing antioxidant, in particular selected from the group consisting of:

- cysteine, acetylcysteine, cysteine hydrochloride, glutathione, alkali metal sulfites (such as sodium sulfite or potassium sulfite), alkali metal bisulfites (such as sodium bisulfite or potassium bisulfite), alkali metal meta bisulfites (such as sodium metabisulfite or potassium metabisulfite), ammonium sulfite, ammonium meta bisulfite, and the like.

For example, in all aspects of the present invention, acid ascorbic can be mixed with at least one sulfur-containing antioxidant, in particular chosen in the group consisting of cysteine, glutathion, sodium metabisulfite, sodium bisulfite, particularly cysteine, glutathion and more particularly cysteine.

As disclosed herein, dog food PEs or PECs can be added to dog food preparations by inclusion or by coating, thereby obtaining palatable dog foods. Addition by inclusion or by coating can be performed by the skilled artisan using conventional methods forming part of the common knowledge in the petfood technical field.

As disclosed herein, said dog food is preferably a nutritionally complete food. In particular, said nutritionally complete dog food can be in the form of kibbles, chunk-in-"X" products, and loafs.

All aspects of the present invention above may be adapted to be used for pets, but dogs are preferred.

**EXAMPLES**

1- MATERIALS AND METHODS

*1.1- Method of palatability assessment: the "two-bowl" test*

Principle of the two-bowl test:

The test is based on the postulate whereby the more food consumed, the more palatable it is.

Individual versus (Two bowls) appetence tests, based on the comparison between two foods, were carried out. Tests are performed either on panel of 36 dogs or on panel of 40 cats, depending on the test's objectives.

Operating method of the test:

- Identical amounts of food product A and food product B were weighed out and placed in identical bowls. The amount present in each ration enables the daily requirements to be met.
- Distribution of the bowls:

    Dog test: the bowls were placed in an individual feed trough accessible to dogs.
    Cat test: The bowls were presented at the same time to each cat in an individual loose box and their positions were switched at each meal to avoid a choice led by handedness.

- Duration of the test:

    * Cat test for dry food: from about 15 minutes to about 20 hours (if one of the two bowls was entirely eaten before the end of the test, the two bowls were removed, and the test was stopped);
    * Dog test for dry food: from about 15 minutes to about 30 minutes (if one of the two bowls was entirely eaten before the end of the test, the two bowls were removed, and the test was stopped).

- Measured parameters:
    First food consumed ("attractiveness") and amount of each food consumed by the end of the test;
- Calculated_parameters:
    individual consumption ratio in % (CR)

$$CRA = \text{consumption of A (g) x } 100/(\text{consumption of A+B) (g)}$$

$$CRB = \text{consumption of B (g) x } 100/(\text{consumption of A+B) (g)}$$

    $\rightarrow$ Average consumption ratio (ACR) = average of all individual ratios (an equal importance is given to each animal, regardless of its size and of its corresponding consumption).

If animals have higher or lower consumption compared to predetermined values (which are function of, e.g., the animal weight and/or metabolism), they are not taken into account into statistical treatment.

Statistical analysis:

Statistical analysis was used to determine if there was a significant difference between the 2 ratios. A Student's t-test with 3 error thresholds, namely 5%, 1% and 0.1%, was performed.

A Chi-square test was used to determine if there was a significant difference between the number of pets with Food A as first food eaten and the number of pets with Food B as first food eaten.

Significance levels are noted as below:

| NS | not significant | (p > 0.05) |
|---|---|---|
| * | significant | (p ≤ 0.05) |
| * * | highly significant | (p ≤ 0.01) |
| *** | very highly significant | (p ≤ 0.001) |

*1.2- Diets*

Control and experimental diets were prepared by using nutritionally-complete foods that contained all known required nutrients for the intended consumer of the food, in appropriate amounts and proportions based, for example, on recommandations of recognized or competent authorities in the field of companion animal nutrition. Such foods are therfore capable of serving as a sole source of dietary intake to maintain life without the addition of supplemental nutritional sources.

When the ingredients to be tested were applied topically on a dry food by coating liquid and/or dry ingredients, a pet food composition was used in the form of "uncoated kibbles". That was a partially-ended food, on which, then, were coated fat and palatability enhancers. When the ingredients to be tested were applied by inclusion, those ingredients were mixed with other ingredients before extrusion (for dry or semi dry pet foods) or before sterilization (for wet pet foods).

When the ingredients to be tested were applied in drinkable compositions, the ingredients were mixed with water or with the fluid compositions.

2- RESULTS

2.1- Products tested in the examples

The examples below report palatability assessments of different food products (or diets), coated with various palatability enhancers (PE1, PE2, PE3, DPE10, DPE11, PE31, and DPE41).

Each palatability enhancer that was used in the examples below incorporated a premix antioxidant in its formulation in order to guarantee the preservation. This premix antioxidant consisted of BHA, propyl gallate, and ascorbic acid.

2.2- Example 1: Effect on dog food palatability of a conventional antioxidant amount of ascorbic acid added to a palatability enhancer (not according to the invention)

A nutritionally-balanced dry food composition suitable for consumption by dogs and obtained after an extrusion and drying process, was prepared, herein referred to as "XX". Control Diet B was "XX" coated with 6% of poultry fat and 2% of PE2 (PE2 = pork liver digest B + the aforementioned premix antioxidant consisting of BHA, propyl gallate, and ascorbic acid). Thus, the amount of ascorbic acid added on the kibble upon coating with PE2 represented a contribution of 0.0001% in the kibble.

Experimental diet B1 was "XX" coated with 6% of poultry fat and 2% of PE2bis which was pork liver digest B prepared without ascorbic acid in the premix antioxidant, this last keeping the same levels of BHA and propyl gallate than the premix antioxydant contained in PE2 (PE2bis = pork liver digest B + the premix antioxidant consisting of BHA and propyl gallate).

As shown in Table 1, consumption of the food was not significantly different between Control Diet B and Experimental diet B1, demonstrating that the level of ascorbic acid added to the kibble by the premix antioxidant contained in PE2 did not increase palatability of dog food.

Thus, in the examples below, the amount of ascorbic acid brought to the kibble by the premix antioxidant contained in the palatability enhancers that were used was considered to be negligible.

Table 1

| Food control ("A" for analysis) | Food experimental ("B" for analysis) | % Asc. acid added on kibbles A vs B | 1st choice & stat. Significance | Consumption ratio | | Statistical significance | Number of validated animals |
|---|---|---|---|---|---|---|---|
| | | | | %A | %B | | |
| Control Diet B (2% PE2 with asc acid in the premix antioxidant) | Expe Diet B1 (2% PE2bis without asc acid in the premix antioxidant) | 0.0001 vs 0 | A NS | 57 | 43 | NS | 36 |

2.3- Example 2: Palatability-enhancing effect upon coating dog foods with liquid PEs comprising ascorbic acid

2.3.1- Example 2A: Palatability-enhancing effect upon coating a dog food with a liquid PE comprising ascorbic acid

A nutritionally-balanced dry food composition suitable for consumption by dogs and obtained after an extrusion and drying process, was prepared, herein referred to as "XX". In this example, a liquid palatability enhancer PE1 (which is a pork liver digest A - different from PE2 used in Example 1) known to have a high palatability for dog, was used. Control diet A was "XX" coated with 6% of poultry fat and 2% of PE1.

Experimental diet A1 was "XX" coated with 6% of poultry fat and 2% of a mix (99.15% PE1 + 0.85% ascorbic acid). This mix was prepared by incorporating ascorbic acid in liquid PE1 at the end of the process of manufacturing, once the preservatives were added. Experimental diet A2 was prepared in the same way as Experimental diet A1, but the proportion of the mix differed : 98.87% PE1 + 1.13% ascorbic acid.

As shown in Table 2 below, consumption of the food was significantly different between Control diet A and Experimental Diet A1, and between Control diet A and Experimental Diet A2, demonstrating the higher palatability for dog of the experimental diets coated with a PE comprising ascorbic acid.

The palatability results clearly showed that the addition of ascorbic acid strongly increased palatability of PE1, boosting its performance, this being already high before addition of ascorbic acid (see Table 3 below with PE1 having a better palatability than PE2).

Table 2

| Food control ("A" for analysis) | Food experimental ("B" for analysis) | % Asc. acid added on kibbles A vs B | 1st choice & stat. Significance | Consumption ratio | | Statistical significance | Number of validated animals |
|---|---|---|---|---|---|---|---|
| | | | | %A | %B | | |
| Control Diet A (2% PE1) | Expe. Diet A1 (2% Mix [99.15% PE1 + 0.85% Asc. acid) | 0 vs 0.017 | B * | 21 | 79 | *** | 28 |
| Control Diet A (2% PE1) | Expe. Diet A2 (2% mix [98.87% PE1+ 1.13% Asc. Acid]) | 0 vs 0.0226 | B ** | 24 | 76 | *** | 33 |
| PE1 = Liquid Pork liver digest A Asc.acid = Ascorbic acid Expe. = Experimental diet | | | | | | | |

2.3.2- Example 2B: Palatability-enhancing effect upon coating a first example of dog food with a different liquid PE comprising ascorbic acid

A nutritionally-balanced dry food composition suitable for consumption by dogs and obtained after an extrusion and drying process, was prepared, herein referred to as "XX". This diet was the same as the diet used in Example 2A.

Control diet A was "XX" coated with 6% of poultry fat and 2% of liquid PE1 (PE1 = pork liver digest A; see Example 2A).

Control Diet B was "XX" coated with 6% of poultry fat and 2% of a liquid palatability enhancer PE2 (PE2 = pork liver digest B; see Example 1 above).

The only difference between the two control diets was the liquid palatability enhancer. PE1 was known to have a higher palatability for dog compared to PE2.

As shown in Table 3 below, consumption of the food was significantly different between Control diet A and Control Diet B, demonstrating the higher palatability for dog of Control diet A. This first test demonstrated the expected higher palatability for dog of PE1 compared to PE2.

A serie of experimental palatability enhancers was prepared by incorporating increasing levels of ascorbic acid in liquid PE2. This addition was done at the end of the process of manufacturing, once the preservatives were added, by mixing liquid PE2 with ascorbic acid in powder (purity of ascorbic acid powder ≥99%).

Experimental diets were "XX" coated with the thus obtained different palatability enhancers.

As shown in Table 3, the level of ascorbic acid added to the diet was between 0.005 to 0.3% by weight of the diet.

The palatability results clearly showed that the addition of ascorbic acid strongly increased palatability of PE2, allowing it to exceed palatability of PE1, and this whatever the level of ascorbic acid tested.

This result further demonstrated that the palatability-enhancing effect of ascorbic acid was obtained with different PEs (PE1 in Example 2A; PE2 in this Example) . Experimental diet B2 is outside the scope of the invention.

**Table 3**

| Food control ("A" for analysis) | Food experimental ("B" for analysis) | % Asc. acid added on kibbles A vs B | 1st choice & stat. Significance | Consumption ratio | | Statistical significance | Number of validated animals |
|---|---|---|---|---|---|---|---|
| | | | | %A | %B | | |
| Control Diet A (2% PE1) | Control Diet B (2% PE2) | 0 vs 0 | A NS | 76 | 24 | *** | 30 |
| Control Diet A (2% PE1) | Expe. Diet B2 (2% Mix [99.75% PE2 + 0.25% asc.acid]) | 0 vs 0.005 | A NS | 40 | 60 | * | 34 |
| Control Diet A (2% PE1) | Expe. Diet B3 (2% Mix [99.15% PE2+ 0.85% asc.acid]) | 0 vs 0.017 | B *** | 20 | 80 | *** | 30 |
| Control Diet A (2% PE1) | Expe. Diet B4 (2% Mix [98.5% PE2 + 1.5% asc.acid]) | 0 vs 0.03 | B *** | 27 | 73 | *** | 33 |
| Control Diet A (2% PE1) | Expe. Diet B5 (2% mix [97.87% PE2+ 2.13% asc.acid]) | 0 vs 0.0426 | B* | 17 | 83 | *** | 36 |
| Control Diet A (2% PE1) | Expe. Diet B6 (2% mix [90% PE2+ 10% asc.acid]) | 0 vs 0.2 | B *** | 27 | 73 | *** | 34 |
| Control Diet A (2% PE1) | Expe. Diet B7 (2% mix [85% PE2+ 15% asc.acid]) | 0 vs 0.3 | B* | 27 | 73 | *** | 30 |
| PE1 = Liquid Pork liver digest A<br>Expe. = Experimental diet<br>PE2 = Liquid Pork liver digest B<br>Asc.acid = Ascorbic acid | | | | | | | |

2.3.3- Example 2C: Palatability-enhancing effect upon coating a second example of dog food with a different liquid PE comprising ascorbic acid

A nutritionally-balanced dry food composition suitable for consumption by dogs and obtained after an extrusion and drying process, was prepared, herein referred to as "YY". This diet was different from diet "XX" used in Examples 2A and 2B by its formulation and shape.

Control diet C was "YY" coated with 6% of poultry fat and 2% of liquid PE1 (the same PE1 as in Examples 2A and 2B).

Experimental diet C1 was "YY" coated with 6% of poultry fat and 2% of a mix (98.75% PE2 + 1.25% ascorbic acid). This mix was prepared by incorporating ascorbic acid in liquid PE2 at the end of the process of manufacturing, once the preservatives were added.

As indicated in Example 2B above, PE1 was known to have a higher palatability for dog compared to PE2.

As shown in Table 4 below, consumption of the food was significantly different between Control diet C and Experimental Diet C1, demonstrating the higher palatability for dog of the experimental diet C1, and this at 2 different periods: 1 month and 3 months after preparation of the diets.

The palatability results clearly showed that the addition of ascorbic acid strongly increased palatability of PE2, allowing it to exceed palatability of PE1, and this in a different diet than the one used in Example 2B. Thus, the palatability-enhancing effect of ascorbic acid was not linked to the kibbles.

Also, the new palatability obtained had a sustained property upon storage.

In conclusion, the addition of ascorbic acid in the palatability enhancer PE2 significantly increased its palatability and allowed to boost its performance.

**Table 4**

| Storage of Diets before test | Food control ("A" for analysis) | Food experimental ("B" for analysis) | % Asc. acid added on kibbles A vs B | 1st choice & stat. Significance | Consumption ratio | | Statistical significance | Number of validated animals |
|---|---|---|---|---|---|---|---|---|
| | | | | | %A | %B | | |
| 1 month | Control Diet C (2% PE1) | Expe. Diet C1 (2% Mix [98.75% PE2+ 1.25% asc.acid]) | 0 vs 0.025 | B ** | 24 | 76 | *** | 28 |
| 3 months | Control Diet C (2% PE1) | Expe. Diet C1 (2% Mix [98.75% PE2+ 1.25% asc.acid]) | 0 vs 0.025 | B NS | 27 | 73 | *** | 34 |
| PE1 = Liquid Pork liver digest A<br>Expe. = Experimental diet<br>PE2 = Liquid Pork liver digest B<br>Asc.acid = Ascorbic acid | | | | | | | | |

2.4- Example 3: Palatability-enhancing effect upon coating a dog food with a liquid PE comprising an edible source of ascorbic acid

A nutritionally-balanced dry food composition suitable for consumption by dogs and obtained after an extrusion and drying process, was prepared, herein referred to as "XX".

This diet was the same as the diet used in Examples 2A and 2B.

Control diet A was "XX" coated with 6% of poultry fat and 2% of liquid PE1.

Experimental diets B8, B9, and B10 were "XX" coated with 6% of poultry fat and 2% of a mix of liquid PE2 and Acerola powder (having a theoretical concentration of ascorbic acid = 17%). Various amounts of Acerola powder in the mix were tested. Thus, each mix was prepared by incorporating a given amount of Acerola powder in liquid PE2 at the end of the process of manufacturing, once the preservatives were added.

As yet mentioned, PE1 was known to have a higher palatability for dog compared to PE2. Acerola, also known as Barbados cherry, is a fruit rich in ascorbic acid.

As shown in Table 5 below, consumption of the food was significantly different between Control diet A and Experimental Diets, demonstrating the higher palatability for dog of the experimental diets comprising Acerola.

The palatability results clearly showed that the addition of Acerola strongly increased palatability of PE2, allowing it to exceed palatability of PE1, and this whatever the level of Acerola tested. Experimental diet B8 is outside the scope of the invention.

**Table 5**

| Food control ("A" for analysis) | Food experimental ("B" for analysis) | % Asc. acid added on kibbles A vs B | 1st choice & stat. Significance | Consumption ratio | | Statistical significance | Number of validated animals |
|---|---|---|---|---|---|---|---|
| | | | | %A | %B | | |
| Control Diet A (2% PE1) | Expe. Diet B8 (2% Mix [97.5% PE2 + 2.5% Acerola powder]) | 0 vs 0.0085 | B * | 30 | 70 | ** | 29 |
| Control Diet A (2% PE1) | Expe. Diet B9 (2% Mix [92.5% PE2 + 7.5% Acerola powder]) | 0 vs 0.0255 | B ** | 25 | 75 | *** | 30 |
| Control Diet A (2% PE1) | Expe. Diet B10 (2% Mix [87.5% PE2 + 12.5% Acerola powder]) | 0 vs 0.0425 | B ** | 27 | 73 | ** | 31 |
| PE1 = Liquid Pork liver digest A Expe. = Experimental diet PE2 = Liquid Pork liver digest B | | | | | | | |

2.5- Example 4: Palatability-enhancing effect upon coating a dog food with a dry PE resulting from drying a liquid PE comprising ascorbic acid

A nutritionally-balanced dry food composition suitable for consumption by dogs and obtained after an extrusion and drying process, was prepared, herein referred to as "XX". This diet was the same as the diet used in Examples 2A, 2B, and 3.

Dry palatability enhancer DPE10 was obtained by drying a liquid PE10 (= pork liver digest C, different from PE1 and PE2).

Dry palatability enhancer DPE11 was obtained by drying a mix of (liquid PE10 and ascorbic acid).

Control diet P was "XX" coated with 6% of poultry fat, then 2% of liquid PE2 (= pork liver digest B) and finally 1% of DPE10.

Experimental diet P1 was "XX" coated with 6% of poultry fat, then 2% of liquid PE2 and finally 1% of DPE11.

As shown in Table 6 below, consumption of the food was significantly different between Control diet P and Experimental Diet P1, demonstrating the higher palatability for dog of the experimental diet coated with a dry PE comprising ascorbic acid.

The palatability results clearly showed that the addition of ascorbic acid to the liquid PE10 before drying increased the palatability-enhancing effect of the resulting DPE11, compared to DPE10 resulting from drying liquid PE10.

This result demonstrated that the palatability-enhancing effect of ascorbic acid was obtained even after drying a liquid PE incorporating ascorbic acid.

**Table 6**

| Food control ("A" for analysis) | Food experimental ("B" for analysis) | % Asc. acid added on kibbles A vs B | 1st choice & stat. Significance | Consumption ratio | | Statistical significance | Number of validated animals |
|---|---|---|---|---|---|---|---|
| | | | | %A | %B | | |
| Control diet P (2% PE2+ 1% DPE10) | Expe. diet P1 (2% PE2 + 1% DPE11 [DPE11 = dry mix of (liquid PE10 + 2.86% Ascorbic acid)]) | 0 vs 0.0286 | B *** | 23 | 77 | *** | 33 |
| PE2= Liquid Pork liver digest B<br>DPE10= Dry Pork liver digest<br>Expe. = Experimental diet<br>PE10= liquid Pork liver digest C<br>Asc.acid = Ascorbic acid | | | | | | | |

2.6- Example 5: Palatability-enhancing effect upon coating a dog food with a liquid PE comprising a low amount of ascorbic acid

A nutritionally-balanced dry food composition suitable for consumption by dogs and obtained after an extrusion and drying process, was prepared, herein referred to as "XX". This diet was the same as the diet used in Examples 2A, 2B, 3, and 4.

Control diet D was "XX" coated with 6% of poultry fat and 2% of liquid PE3 (PE3 = poultry viscera digest).

Experimental diet D1 was "XX" coated with 6% of poultry fat and 2% of a mix (99.92% PE3 + 0.08% ascorbic acid). This mix was prepared by incorporating ascorbic acid in liquid PE3 at the end of the process of manufacturing, once the preservatives were added.

As shown in Table 7, the palatability results clearly showed that the addition of ascorbic acid at a level of 0.0016% by weight of the diet strongly increased palatability of PE3. This result further demonstrated that the palatability-enhancing effect of ascorbic acid was obtained with low concentrations of ascorbic acid, and with PEs belonging to different ranges such as liver-based PEs or viscera-based PEs. Experimental Diet D 1 is outside the scope of the invention.

**Table 7**

| Food A-control | Food B-experimental | % Ascorbic acid added on kibbles A vs B | 1rst choice | Consumption ratio | | Statistical Significance | Number of validated animals |
|---|---|---|---|---|---|---|---|
| | | | | % A | %B | | |
| Control dietD (2% PE3) | Exper Diet D1 (2% Mix [99.92% PE3+ 0.08% asc.acid]) | 0 vs 0.0016 | B * | 19 | 81 | *** | 30 |

2.7- Example 6: Palatability-enhancing effect upon coating a dog food with an ascorbic acid solution (not according to the invention)

A nutritionally-balanced dry food composition not encompassed by the wording of the claims, suitable for consumption by dogs and obtained after an extrusion and drying process, was prepared, herein referred to as "XX".

This diet was the same as the diet used in Examples 2A, 2B, 3, 4, and 5.

Control diet D was "XX" coated with 6% of poultry fat and 2% of liquid PE3 (PE3 = poultry viscera digest).

Experimental diet D2 was "XX" coated with 6% of poultry fat and 2% of a solution of (98.5 % water + 1.5% ascorbic acid). The solution was prepared by mixing ascorbic acid in water until complete dissolution.

As shown in Table 8, consumption of food was significantly different between Control diet D and Experimental diet D2, demonstrating the strong palatability effect of ascorbic acid in solution, allowing it to exceed palatability of PE3.

Table 8

| Food control ("A" for analysis) | Food experimental ("B" for analysis) | % Asc. acid added on kibbles A vs B | 1st choice & stat. Significance | Consumption ratio | | Statistical significance | Number of validated animals |
|---|---|---|---|---|---|---|---|
| | | | | %A | %B | | |
| Control Diet D (2% PE3) | Expe. Diet D2 (2% solution of [98.5% water+1.5% asc.acid]) | 0 vs 0.03 | B ** | 36 | 64 | * | 33 |
| PE3 = Liquid Poultry viscera digest<br>Expe. = Experimental diet<br>Asc.acid = Ascorbic acid | | | | | | | |

2.8- Example 7: Palatability-enhancing effect upon including ascorbic acid in a dog food formulation before extrusion

Three nutritionally-balanced dry food compositions suitable for consumption by dogs were prepared. The formulation was exactly the same, with the exception of two incorporating either 0.05 % or 0.5% of ascorbic acid in their formulation before extrusion. The diets were herein referred as "PCW" for the diet without ascorbic acid added in the formulation, and "PCI" (including 0.5% ascorbic acid) and "PCJ" (including 0.05% ascorbic acid) for the diets including ascorbic acid in the formulation. All diets underwent extrusion and drying process. The diets were different from the previous dog foods above referred to as "XX" and "YY".

Control diet PCW1 was "PCW" coated with 6% of poultry fat, then 2% of liquid PE2 (= pork liver digest B).

Experimental diet PCI1 was "PCI" including 0.5% ascorbic acid and coated with 6% of poultry fat, then 2% of liquid PE2.

Experimental diet PCJ1 was "PCJ" including 0.05% ascorbic acid and coated with 6% of poultry fat, then 2% of liquid PE2.

As shown in Table 9 below, consumption of the food was significantly different between Control Diet PCW1 and Experimental Diets PCI1 and PCJ1, demonstrating the higher palatability for dog of the experimental diet including ascorbic acid in its formulation before extrusion. The palatability results clearly showed that the addition of ascorbic acid strongly increased palatability of a dog food diet, and that the palatability-enhancing effect of ascorbic acid was obtained not only by coating kibbles with PEs comprising ascorbic acid (see Examples above), but also by including ascorbic acid in the core of the kibbles.

Table 9

| Food control ("A" for analysis) | Food experimental ("B" for analysis) | 1st choice & stat. Significance | Consumption ratio | | Statistical significance | Number of validated animals |
|---|---|---|---|---|---|---|
| | | | %A | %B | | |
| Control Diet PCW1 (Control kibble coated with 2% PE2) | Expe. Diet PCI1 (Expe. Kibble including 0.5% asc. acid and coated with 2% P2) | B *** | 22 | 78 | *** | 34 |

(continued)

| Food control ("A" for analysis) | Food experimental ("B" for analysis) | 1st choice & stat. Significance | Consumption ratio | | Statistical significance | Number of validated animals |
|---|---|---|---|---|---|---|
| | | | %A | %B | | |
| Control Diet PCW1 (Control kibble coated with 2% PE2) | Expe. Diet PCJ1 (Expe. Kibble including 0.05% asc. acid and coated with 2% P2) | B ** | 20 | 80 | *** | 30 |
| PE2 = Liquid Pork liver digest B<br>Expe. = Experimental diet<br>DPE10= Dry pork liver digest<br>Asc.acid = Ascorbic acid | | | | | | |

2.9- Example 8: Palatability-enhancing effect upon coating a dog food with a liquid PE comprising derivatives and/or isomers and/or salts of ascorbic acid

A nutritionally-balanced dry food composition suitable for consumption by dogs and obtained after an extrusion and drying process, was prepared, herein referred to as "XX". This diet was the same as the diet used in Examples 2A, 2B, 3, 4, and 5.

Control diet B was "XX" coated with 6% of poultry fat and 2% of liquid PE2 (PE2 = pork liver digest B; see Examples above).

A serie of experimental palatability enhancers was prepared by incorporating in liquid PE2, compounds selected from ascorbic acid, ascorbic acid isomers, ascorbic acid derivatives, and ascorbic acid salts. This addition was done at the end of the process of manufacturing, once the preservatives were added, by mixing liquid PE2 with ascorbic acid or derivatives thereof or isomers thereof or salts thereof.

Experimental diets were "XX" coated with the thus obtained different palatability enhancers.

As shown in Table 10, the palatability results clearly showed that the addition of ascorbic acid or derivatives thereof or isomers thereof or salts thereof strongly increased palatability of PE2.

**Table 10**

| Food A-control | Food B-experimental | % Ascorbic acid or derivatives / Isomers / salts added on kibbles A vs B | 1rst choice | Consumption ratio | | Statistical Significance | Number of validated animals |
|---|---|---|---|---|---|---|---|
| | | | | % A | %B | | |
| Control Diet B (2% PE2) | Expe Diet B13 (2% mix [98.5% PE2+ 1.5% Ascorbic acid)) | 0 vs 0.030 | B *** | 21 | 79 | *** | 37 |
| Control Diet B (2% PE2) | Expe diet B14 (2%mix [98.3% PE2+ 1.7% Sodium ascorbate]) | 0 vs 0.034 | B NS | 30 | 70 | *** | 37 |
| Control Diet B (2% PE2) | Expe diet B15 (2%mix [98.5% PE2+ 1.5% Isoascorbic acid]) | 0 vs 0.030 | B * | 28 | 72 | ** | 33 |
| Control Diet B (2% PE2) | Expe diet B16 (2% mix [98.2% PE2+ 1.8% Sodium Isoascorbic acid]) | 0 vs 0.036 | B NS | 31 | 69 | ** | 29 |

(continued)

| Food A-control | Food B-experimental | % Ascorbic acid or derivatives / Isomers / salts added on kibbles A vs B | 1rst choice | Consumption ratio | | Statistical Significance | Number of validated animals |
|---|---|---|---|---|---|---|---|
| | | | | % A | %B | | |
| Control Diet B (2% PE2) | Expe diet B17 (2% mix [98.2% PE2+ 1.8% Calcium ascorbate]) | 0 vs 0.036 | B NS | 31 | 69 | ** | 32 |
| Control Diet B (2% PE2) | Expe diet B18 (2% mix [96.5% PE2+ 3.5% Ascorbyl palmitate]) | 0 vs 0.07 | B ** | 21 | 79 | *** | 32 |
| PE2 = Liquid Pork liver digest B  Expe. = Experimental diet | | | | | | | |

2.10- Comparative Example 9: Assessment of the palatability-enhancing potential upon coating a cat food with a liquid PE comprising ascorbic acid

This Example illustrating results obtained with cat can be compared to Examples above illustrating results obtained with dog.

A nutritionally-balanced dry food composition suitable for consumption by cats and obtained after an extrusion and drying process, was prepared, herein referred to as "CTX". Control diet Cat was "CTX" coated with 6% of poultry fat, then 3% of a liquid palatability enhancer PE31 (= liquid pork liver digest B for cat) and finally 2% of a dry palatability enhancer DPE41 (= dry pork liver digest B for cat).

Experimental diet Cat 1 was "CTX" coated with 6% of poultry fat, then 3% of a mix (99.15% PE31+ 0.85% ascorbic acid) and finally 2% of dry DP41.

Experimental diet Cat 2 was "CTX" coated with 6% of poultry fat, then 3% of a mix (98.3% PE31+ 1.7% ascorbic acid) and finally 2% of dry DP41.

As shown in Table 11 below, consumption of the food by cat was not significantly different between Control diet and Experimental Diets, demonstrating that the composition comprising a mixture of ascorbic acid and liquid PE31 did not enable to achieve a higher palatability-enhancing effect than the one obtained using liquid PE31 in cat , contrary to what was observed with dog (see Examples above).

**Table 11**

| Day | Food control ("A" for analysis) | Food experimental ("B" for analysis) | 1st choice & stat. Significance | Consumption ratio | | Statistical significance | Number of validated animals |
|---|---|---|---|---|---|---|---|
| | | | | %A | %B | | |
| Day 1 | Control Diet Cat (3% PE31+ 2% DP41) | Expe. Diet Cat 1 (3% Mix [99.15% PE31+ 0.85% asc. Acid] + 2% DP41) | B * | 44 | 56 | NS | 31 |
| Day 2 | | | NS | 51 | 49 | NS | 37 |

(continued)

| Day | Food control ("A" for analysis) | Food experimental ("B" for analysis) | 1st choice & stat. Significance | Consumption ratio | | Statistical significance | Number of validated animals |
|---|---|---|---|---|---|---|---|
| | | | | %A | %B | | |
| Day 1 | Control Diet Cat (3% PE31+ 2% DP41) | Expe. Diet Cat 2 (3% Mix [98.3% PE31+ 1.7% asc. Acid] + 2% DP41) | NS | 56 | 44 | NS | 38 |
| Day 2 | | | NS | 54 | 46 | NS | 38 |

PE 31 = Liquid Pork liver digest for cats
Expe. = Experimental diet
DPE 41= Dry pork liver digest B for cats
Asc.acid = Ascorbic acid

## Claims

1. A dog food palatability-enhancing composition comprising :

   - at least 0,01% by weight of one compound selected from the group consisting of: ascorbic acid; isomers thereof; derivatives thereof; salts thereof; and combinations thereof;
   - and at least one liquid component, wherein said liquid component is an animal digest.

2. The palatability-enhancing composition according to claim 1, further comprising at least one appropriate food carrier for said compound.

3. The palatability-enhancing composition according to claim 1 or 2, further comprising at least one palatability enhancer.

4. The palatability-enhancing composition according to any one of claims 1 to 3, further comprising at least one Maillard ingredient.

5. Use of at least one compound selected from the group consisting of: ascorbic acid; isomers thereof; derivatives thereof; salts thereof; and combinations thereof, as a palatability-enhancing element of a dog food palatability-enhancing composition, said dog food palatability-enhancing composition further comprising at least one liquid component.

6. A method for the preparation of a dog food palatability-enhancing composition according to claim 1, comprising mixing:

   - at least one compound selected from the group consisting of: ascorbic acid; isomers thereof; derivatives thereof; salts thereof; and combinations thereof; and
   - at least one liquid component, wherein said liquid component is an animal digest.

7. The dog food palatability-enhancing composition according to any one of claims 1 to 4, the method according to claim 6, or the use according to claim 5, wherein said compound is ascorbic acid.

## Patentansprüche

1. Schmackhaftigkeitsverbessernde Zusammensetzung für Hundefutter, die Folgendes umfasst:

   - mindestens 0,01 Gew.-% einer Verbindung ausgewählt aus der Gruppe bestehend aus: Ascorbinsäure; ihren Isomeren; ihren Derivaten; ihren Salzen; und Kombinationen davon;
   - und mindestens eine flüssige Komponente, wobei die flüssige Komponente ein tierischer Verdauungsstoff ist.

**2.** Schmackhaftigkeitsverbessernde Zusammensetzung nach Anspruch 1, die ferner mindestens einen geeigneten Lebensmittelträger für die Verbindung umfasst.

**3.** Schmackhaftigkeitsverbessernde Zusammensetzung nach Anspruch 1 oder 2, die ferner mindestens einen Schmackhaftigkeitsverstärker umfasst.

**4.** Schmackhaftigkeitsverbessernde Zusammensetzung nach einem der Ansprüche 1 bis 3, die ferner mindestens einen Maillard-Inhaltsstoff umfasst.

**5.** Verwendung mindestens einer Verbindung ausgewählt aus der Gruppe bestehend aus: Ascorbinsäure; ihren Isomeren; ihren Derivaten; ihren Salzen; und Kombinationen davon, als ein schmackhaftigkeitsverbesserndes Element einer schmackhaftigkeitsverbessernden Zusammensetzung für Hundefutter, wobei die schmackhaftigkeitsverbessernde Zusammensetzung für Hundefutter ferner mindestens eine flüssige Komponente umfasst.

**6.** Verfahren zur Herstellung einer schmackhaftigkeitsverbessernden Zusammensetzung für Hundefutter nach Anspruch 1, das Folgendes umfasst:
Mischen:

- mindestens einer Verbindung ausgewählt aus der Gruppe bestehend aus: Ascorbinsäure; ihren Isomeren; ihren Derivaten; ihren Salzen; und Kombinationen davon; und
- mindestens einer flüssigen Komponente, wobei die flüssige Komponente ein tierischer Verdauungsstoff ist.

**7.** Schmackhaftigkeitsverbessernde Zusammensetzung für Hundefutter nach einem der Ansprüche 1 bis 4, Verfahren nach Anspruch 6 oder Verwendung nach Anspruch 5, wobei die Verbindung Ascorbinsäure ist.

## Revendications

**1.** Composition améliorant l'appétence d'un aliment pour chiens, comprenant :

- au moins 0,01 % en poids d'un composé choisi dans le groupe constitué de : l'acide ascorbique ; ses isomères ; ses dérivés ; ses sels ; et leurs combinaisons ;
- et au moins un composant liquide, dans laquelle ledit composant liquide est un digestat animal.

**2.** Composition améliorant l'appétence selon la revendication 1, comprenant en outre au moins un support alimentaire approprié pour ledit composé.

**3.** Composition améliorant l'appétence selon la revendication 1 ou 2, comprenant en outre au moins un agent améliorant la palatabilité.

**4.** Composition améliorant l'appétence selon l'une quelconque des revendications 1 à 3, comprenant en outre au moins un ingrédient de Maillard.

**5.** Utilisation d'au moins un composé choisi dans le groupe constitué de: l'acide ascorbique ; ses isomères ; ses dérivés ; ses sels ; et leurs combinaisons, en tant qu'élément améliorant l'appétence d'une composition améliorant l'appétence d'un aliment pour chiens, ladite composition améliorant l'appétence d'un aliment pour chiens comprenant en outre au moins un composant liquide.

**6.** Procédé de préparation d'une composition améliorant l'appétence d'un aliment pour chiens selon la revendication 1, comprenant
le mélange de :

- au moins un composé choisi dans le groupe constitué par : l'acide ascorbique ; ses isomères ; ses dérivés ; ses sels ; et leurs combinaisons ; et
- au moins un composant liquide, dans lequel ledit composant liquide est un digestat animal.

**7.** Composition améliorant l'appétence des aliments pour chiens selon l'une quelconque des revendications 1 à 4, le procédé selon la revendication 6 ou l'utilisation selon la revendication 5, dans laquelle ledit composé est l'acide

ascorbique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9528854 A
- WO 2013095412 A
- WO 2007126990 A2